# EUROPEAN PATENT SPECIFICATION

(11) **EP 2 767 148 B1**
(45) Date of publication and mention of the grant of the patent: **29.06.2016**
(21) Application number: 14154947.7
(22) Date of filing: 13.02.2014
(51) Int. Cl.: A01C 3/06, A01C 17/00

(54) **CENTRIFUGAL SPREADER WITH CUTTING MEANS FOR SPREADING DUNG**
SCHLEUDERSTREUER FÜR MIST MIT SCHNEIDMITTEL
EPANDEUR CENTRIFUGE POUR FUMIER AVEC MOYEN DE COUPE

(30) Priority: 13.02.2013 DK 201370076
(43) Date of publication of application: 20.08.2014
(73) Proprietor: Samson Agro A/S, 8800 Viborg (DK)
(72) Inventor: Bentzen, Anders Ajith, 7100 Vejle (DK)
(74) Representative: Nielsen, Leif

(56) References cited:
- WO-A1-2013/013233
- DK-A- 200 001 949
- FR-A1- 2 851 411
- US-A- 1 839 597

## Description

### Field of the Invention

The present invention concerns a centrifugal spreader adapted to spread soil improvement material, in particular farmyard manure on a field. The centrifugal spreader can, however, also be used for spreading bedding in stable areas. The centrifugal spreader includes at least one rotor on an upright rotor shaft which is seated in a bearing housing with sealings, wherein the rotor or rotors are disposed under a supply unit for supplying the soil improvement material to the at least one rotor. The rotor includes spreader arms for flinging this soil improvement material out during rotation. The invention also concerns use thereof.

### Background of the Invention

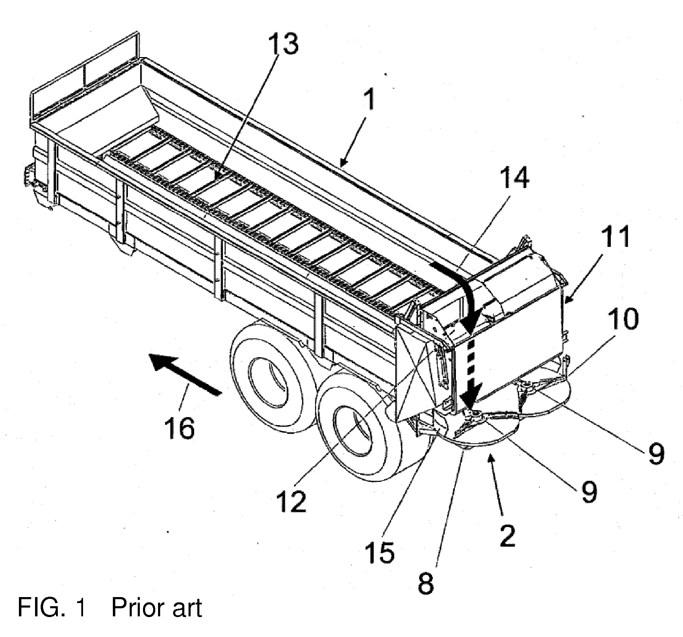

DK patent 176126 discloses an agricultural machine with a centrifugal spreader for soil improvement material, such as e.g. farmyard manure, sludge, compost or lime. A drawing of such an agricultural machine is depicted in Fig. 1. The agricultural machine comprises a vehicle 1 provided with a centrifugal spreader 2. The centrifugal spreader 2 includes a spreader table 8 supporting two rotors 9, each provided with three spreader arms 10. Above the spreader table 8 is mounted a cutter housing 11. Two cutter shafts 12 are provided in the cutter housing 11 for cutting up the material conveyed by bottom chains 13 in the vehicle 1. The material is moved in the indicated direction 14 up over the cutter cylinders 12 and down behind the latter in the interspace between the cutter cylinders 12 and the back side of the cutter housing 11. The rotors are provided at the end of a shaft extending through a bearing into a housing with a gearbox.

A different centrifugal spreader is disclosed in French patent application FR2851411A1

When using farmyard manure it happens that remains of strings or cords from straw and hay used in the stable are present in the farmyard manure. Such strings or cords may be transported with the manure to the centrifugal spreader and have the tendency of being wound around the rotor and its shaft. In particular cords used for big bales, such as reinforced plastic cords, have a tendency of becoming hot and be wound so tightly and firmly around the rotor and shaft that they become very difficult to remove again. Moreover, there is a risk that filaments of the cords come into bearing housing and rotor shaft, or even through the sealings and into the gearbox, thereby destroying the machine.

WO2013/013233 discloses a rotary wood chipper comprising a safety device for cutting cables that has been captured by a rotor. The safety device comprises a stationary shearing edge at the rim of the rotor.

### Object of the Invention

Therefore it is the object of the invention to improve the prior art. It is particularly an object to provide a centrifugal spreader relieving the drawbacks with regard to cords or strings that winding around the rotor and entailing the risk of penetrating in between bearing housing and the rotor shaft and into the gearbox.

### Description of the Invention

This object is achieved by a centrifugal spreader as defined in claim 1.

The centrifugal spreader according to the invention is adapted to spread soil improvement material on a field, in particular farmyard manure. The centrifugal spreader includes at least one rotor, for example one or two rotors, on an upright rotor shaft, wherein the rotor or rotors are disposed under a supply unit for supplying the soil improvement material to the at least one rotor. The rotor includes a spreader arm unit with spreader arms, typically two or three spreader arms, for flinging this soil improvement material out during rotation. The spreader arm unit is driven by the rotor or the rotor shaft. The rotor includes a surface area extending around the rotor shaft, and there is provided at least one stationary shearing edge, e.g. one, two or three shearing edges, in contact with this surface area or spaced apart from this surface area. By stationary shearing edge is meant a shearing edge that is not rotating together with the rotor. The shearing edge can thus be mounted displaceable on the bearing housing or other stationary part of the machine such that it is adjustable relative to the surface area. The surface area is preferably provided at a position under the spreader arms.

By such an arrangement it is prevented that cords or strings carried with the soil improvement material and which is wound around the rotor will penetrate in between bearing housing and the rotor shaft, in that they will be cut off and into pieces by the shearing edge before they reach the rotor shaft. The risk of the cords penetrating into sealings between the bearing housing and the rotor shaft and the risk of cords or cord fragments penetrating into the gearbox is hereby obviated.

For example, the distance from the shearing edge to the surface area is less than 3 mm, or less than 2 mm, or less than 1 mm, or less than 0.5 mm in order to cut the cord in a satisfactory way if carried by the rotor along the surface area. The distance can be 0 mm as a shearing edge of spring steel bearing against the surface area can be applied. The distance is, for example, at least 0.1 or 0.2 or 0.5 mm. For stationary shearing edges, the distance is typically between 0.2 and 1 mm.

In some embodiments, the surface area is rotationally symmetrical, pointing away from the rotor shaft, as this will safeguard that the rotation of the rotor flings cord fragments away from the rotor. Alternatively, the surface area is provided directed downwards, which, however, is not preferable, and neither is it preferred with a surface area pointing towards the shaft. The surface area is e.g. cylindrical or conical but can also have rounded shapes. It is important that the shearing edge is adapted to this surface area such that an effective cutting of possible cords carried by the rotor is performed.

In some practical embodiments, the rotor includes a downwardly facing collar extending around the rotor shaft and where the surface area is part of this collar.

The rotor shaft is typically seated at its lower end. A stationary flange is provided under the rotor; where the rotor shaft extends through a passage in this flange, such as a bearing or a packing, and where the flange has an upwardly directed projection on which the shearing edge is provided. For example, this embodiment can be combined with the collar. Then it will be useful if the flange has an elevation and a recess between the shearing edge and the elevation, and where the collar runs in this recess. This interaction between elevation and recess may constitute part of a labyrinth sealing between bearing housing and the rotor shaft as the flange can have several annular elevations that interact with corresponding recesses.

As alternative to the mentioned elevation there may be used a resilient steel blade which is in direct contact with the surface area. Such a steel blade can be mounted exchangeably on a stationary flange, on the housing of the gearbox or similar fixed machine part.

If the surface area is rotationally symmetric, e.g. in horizontal plane or in an approximately horizontal plane, and pointing away from the rotor shaft, it is advantageous if the projection has a curving surface facing the surface area and that the curving surface has a corner at which the shearing edge is provided. For example, the curving surface of the projection has a radius of curvature largely corresponding to the radius of curvature of the surface area.

A centrifugal spreader will typically include a gearbox driving the rotor shaft. The flange is then advantageously provided on the gearbox, e.g. screwed thereon.

As mentioned above, the rotor shaft is oriented upright, for example vertically or largely vertically, where the term "largely vertically" is used by deviation from vertical up to 15°, e.g. up to 10° or up to 5°. Even when the angle of the rotor shaft is up to 10° or 15° from vertical, the rotor shaft can still be termed as "upright" as opposed to a "lying" shaft. The term "upright" typically denotes an angle less than 45° from vertical, whereas the word "lying" denotes an angle less than 45° from horizontal. The term "upright" is characteristic for the orientation of the shaft relative to horizontal and will thus also cover a "hanging" shaft; the term is then not limited to a shaft only suspended at one end, but also covering shafts which are only suspended at the upper end, i.e. hanging, and shafts which are suspended at the upper as well as the lower ends.

In advantageous embodiments the centrifugal spreader includes a spreader table, for example as described in DK patent 176126, with an upper face where the rotor is provided with the spreader arms over this upper face, and where the surface area is provided under this upper face, for example at the opposite side of the spreader table in relation to the spreader arms.

### Description of the Drawing

The invention is explained in the following with reference to the drawing, where:
Fig. 1 is a reproduction from DK 176126 of a centrifugal spreader according to prior art;
Fig. 2 shows the centrifugal spreader of a manure spreader according to the invention;
Fig. 3 shows the gearbox with two ejectors as rotors on the gearbox;
Fig. 4 shows an enlarged detail of Fig. 3;
Fig. 5 shows a flange with a bearing mounted between gearbox and rotor, where the flange has a shearing edge;
Fig. 6 shows a cross-section through rotor and bearing housing for illustrating sealings there between.

### Detailed Description of the Invention

Fig. 1 is a reproduction from DK patent 176126 of a centrifugal spreader according to the prior art as described in the introduction.

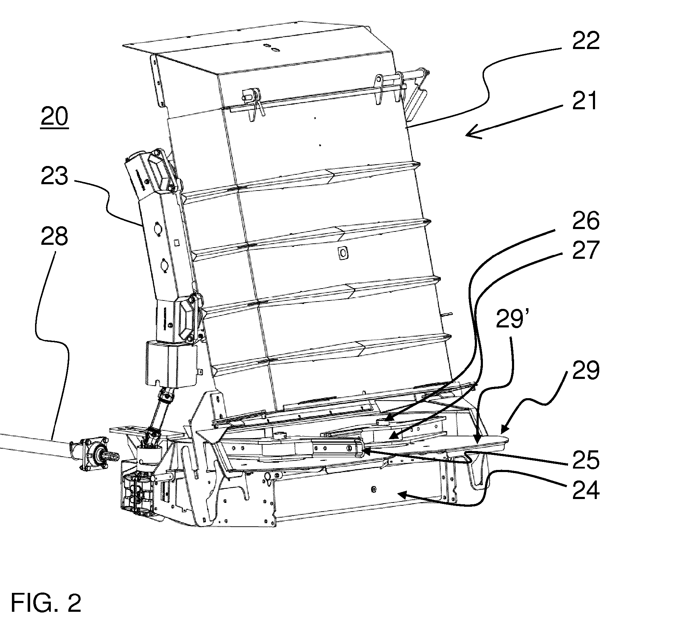

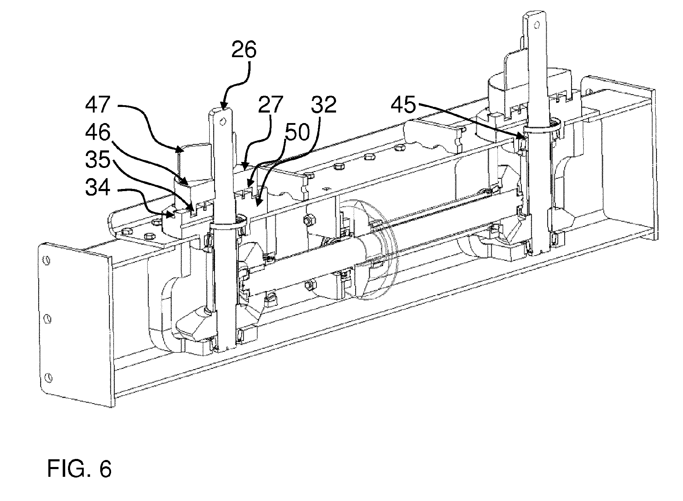

Fig. 2 shows the centrifugal spreader 21 of a manure spreader 20 according to the invention. The centrifugal spreader 21 includes a frame 23 and a container 22 for manure provided on the frame 23. A gearbox 24 coupled to a drive shaft 28 delivering torque to the gearbox 24 is provided under the container 22. Two rotor shafts 26 extend from the gearbox 24 through a spreader table 29, driving two rotors 27 which also extend through the spreader table 29 and which have a spreader arm unit 48 (shown in more detail on Fig. 6) with spreader arms 25 over the upper surface 29' of the spreader table 29. The spreader arms 25 act as ejectors during rotation of the rotors 27 when manure is supplied from the container 22 from above and down onto the rotors 27. The basic and general principle of supplying manure from a container to the top side of rotors is disclosed in the prior art.

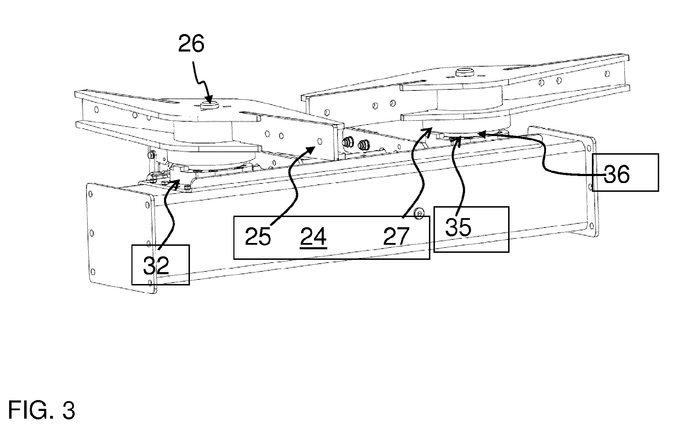

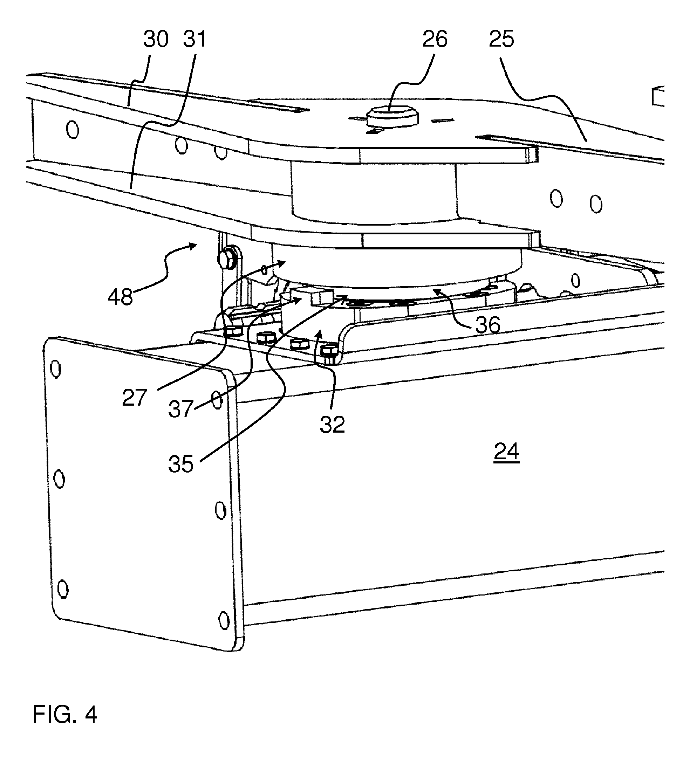

Fig. 3 shows the gearbox 24 with two rotors 27 as an enlarged detail wherein the spreader plate 29 is removed for the sake of clarity. Fig. 4 shows an enlarged detail of Fig. 3. The rotors 27 rotate on a rotor shaft 26 which is oriented upright, e.g. vertical or largely vertical. However, it is to be noted that this orientation of the shaft 26 can deviate from vertical, e.g. as disclosed in DK 176126 where the spreader table is provided with a tilting mechanism such that the orientation of the spreader table and of the rotors can be changed in order to adjust the effect of spreading the manure.

The rotors 27 include two spreader arms 25 which are mechanically reinforced by an upper 30 and a lower 31 reinforcement plate which are mutually parallel. The rotor shaft 26 extends from the gearbox 24 through a flange 32 and through the reinforcement plates 30, 31. As shown on Fig. 6, the rotor 27 also includes a driver flange 46 with a downwardly facing collar 35 under the lower reinforcement plate 31. The collar 35 is formed tubularly with a cylindrical outer side 36. As shown on Fig. 6, the driver flange 46 is provided at its outer side with drivers 47 that engage recesses in a detachably mounted spreader arm unit 48 for driving the latter.

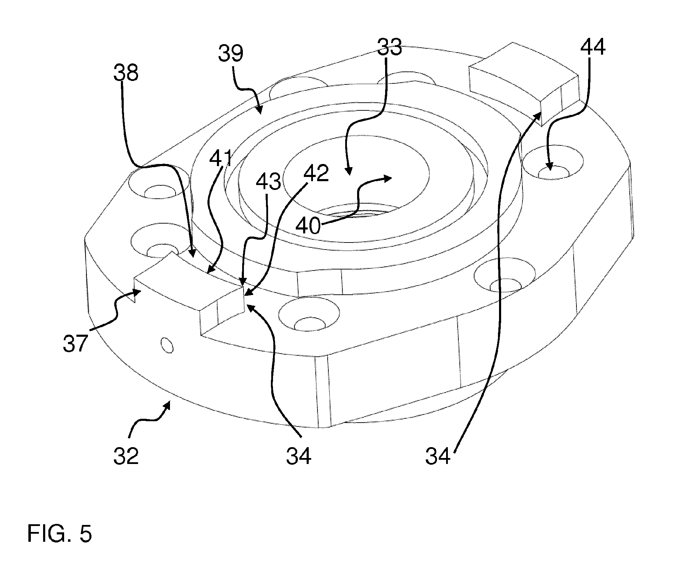

The flange 32 on the gearbox 24 is shown in greater detail in Fig. 5. The flange 32 is mounted on the gearbox 24 by means of bolts (not shown) extending through bolt guides 44. The flange 32 is thereby provided between the gearbox 24 itself and the rotor 27 and has a passage 33 for the rotor shaft 26, e.g. with a bearing 40 for the rotor shaft 26. On the flange 32 is provided two shearing edges 34 causing cutting of the cords or strings that are undesirably caught by the rotor 27. The flange 32 is provided with a recess 38 between the shearing edge 34 and a flange elevation 39 extending around the passage 33 and thereby around the rotor shaft 26. The downwardly facing collar 35 of the rotor 27 extends in this recess 38 such that the cylindrical outer side 36 of the collar 35 forms the surface area on which the shearing edge 34 acts.

Fig. 6 shows a sectional view illustrating a labyrinth sealing 50 between the rotor 27 and the flange 32 and a packing box/bearing housing 45 around the rotor shaft 26. Moreover, it appears that the rotor includes a driver flange 46 provided with drivers 47 that are engaging recesses (not shown) in the spreader arm unit 48 for imparting rotation to it.

If a cord is caught by the rotor 27, the cord will be wound around the rotor 27 and also tend to be wound around the downwardly facing annular collar 35. But the cord will be caught by the shearing edge 34 which is provided close to the cylindrical outer surface area 36 of the downwardly facing collar 35 whereby the cord will be cut or planed away by the shearing edge 34. Therefore, the cord cannot penetrate in through the sealing around the rotor shaft 26.

In order to effectively cut off the cord, the shearing edge 34 is provided as part of an upwardly directed projection 37 with a circularly curving surface towards the surface area 36 at the periphery of the downwardly facing collar 35, wherein the curving surface 41 of the projection 37 is designed with a constant radius of curvature so as to largely following the cylindrical periphery of the surface area of the downwardly facing collar 35. The curving surface 41 of the projections 37 ends with an edge 42 at a corner 43 of the projection 37 where the shearing edge 34 is provided as part of this edge 42. A cord tending to be wound around the downwardly facing annular collar 35 will then be cut or planed away by the shearing edge 34 at the edge 42 of the projection 37. As an alternative to the shown embodiment with a cast projection 37 there may be used an adjustable projection bolted thereon.

The cut cord fragments will then slide off the downwardly facing annular collar 35 and be flung away. The shearing edge 34 is provided close to the surface area 36 of the downwardly facing annular collar 35, e.g. with a spacing between 0.2 and 1 mm between the shearing edge 34 and the periphery of the downwardly facing annular collar in the recess.

It is noted that in order to get to the rotor shaft 26 and possibly into the bearing 40, a cord or cut-off cord fragment has to pass the gap between the shearing edge 34 and the downwardly facing collar 35 in order to pass under the collar 35 and then through the gap between the collar 35 and the flange elevation 39 where the labyrinth sealing 50 is formed between the rotor 27 and the flange 32 (see Fig. 6). Passage of a cord fragment between all these gaps is not probable as the shearing edge 34 has cut the cord into lesser fragments, and the rotor 27 has flung the fragments off the rotor 27 before such passage can have occurred. It is thus associated with a very high degree of protection of the rotor shaft 26 and the packing box/bearing housing 45 of the bearing 40 against cord fragments, a fact which has also appeared in practice.

As illustrated on the Figures, the downwardly facing collar 35 is cylindrical, though this is not a necessity as other shapes can be used as well, e.g. a conical collar or a collar with an annular shape with curving cross-section, if only the shearing edge 34 has a shape following the outer side of the collar 35. Alternatively, the shearing edge can be provided at the lower edge of the collar 35, or even on another lower edge of the rotor 27; however, it is preferred that the shearing edge 34 is provided against a surface area 36 facing away from the rotor shaft 26.

As shown on the drawing and in typical use, the curving surface 41 of the projection 37 is vertical and curves in a horizontal plane if the spreader table 29 is horizontal. However, it is to be mentioned, as disclosed in DK 176126, that the spreader table 29 also can be provided with a tilting mechanism such that the orientation of the spreader table 29 and the rotors 27 can be changed in order to adjust the spreading of the manure.

A centrifugal spreader 21 as described above can e.g. be mounted on a vehicle of the kind shown in connection with the prior art on Fig. 1. In that case there may also be provided a cutter device with cutter shafts 12 in the cutter housing 11 on Fig. 1 for cutting up the material conveyed by bottom chains 13 in the vehicle 1. Alternatively, the centrifugal spreader 21 can also be provided as an independent unit where the manure is filled into a larger container which in principle corresponds to the container in Fig. 2, but which typically will have larger dimensions.

The centrifugal spreader is intended for spreading soil improvement material in the form of farmyard manure, in particular farmyard manure containing cord remains, though generally it may also be used for other materials alone or in mixtures, e.g. containing sludge, compost, ash and lime.

### List of Reference Numbers

- 1: vehicle (prior art Fig. 1)
- 2: centrifugal spreader (prior art Fig. 1)
- 8: spreader table (prior art Fig. 1)
- 9: rotors (prior art Fig. 1)
- 10: spreader arms (prior art Fig. 1)
- 11: cutter housing (prior art Fig. 1)
- 12: cutter shafts (prior art Fig. 1)
- 13: bottom chains (prior art Fig. 1)
- 14: direction of transport of manure into cutter housing 11 (prior art Fig. 1)
- 20: manure spreader
- 21: centrifugal spreader
- 22: container for manure
- 23: frame
- 24: gearbox
- 25: spreader arms on rotor 27
- 26: rotor shaft
- 27: rotor
- 28: drive shaft
- 29: spreader table
- 30: upper reinforcing plate
- 31: lower reinforcing plate
- 32: flange
- 33: shaft passage in flange 32
- 34: shearing edge
- 35: downwardly facing collar of rotor 27 under lower reinforcing plate 31
- 36: outer surface area of the collar 35
- 37: projection
- 38: recess between shearing edge 34 and flange elevation 39
- 39: flange elevation
- 40: bearing in flange 32
- 41: curving surface of projection 37
- 42: surface area of curving surface
- 43: corner at curving surface 42 of projection 37
- 44: bolt passages in flange 32
- 45: packing box/bearing housing
- 46: driver flange
- 47: drivers on driver flange 46
- 48: spreader arm unit
- 50: labyrinth sealing

## Claims

1. A centrifugal spreader (21) for spreading soil improvement material, in particular farmyard manure, upon a field, wherein the centrifugal spreader (21) includes at least one rotor (27) on an upright rotor shaft (26) seated in a bearing housing (45) with sealings; wherein the rotor (27) is disposed under a supply unit (22) for supplying the soil improvement material to the rotor (27), and wherein the rotor (27) includes spreader arms (25) for flinging the soil improvement material out during rotation; and wherein the rotor (27) includes a surface area (36) extending around the rotor shaft (26), **characterised in that**
there is provided at least one stationary shearing edge (34) that is in contact with this surface area (36) or is spaced less than 3 mm apart from this surface area (36), adapted to cut strings or cords carried by the rotor (27) along this surface area (36) in order thereby to prevent strings or cords that are carried with the soil improvement material and wound around the rotor (27) to penetrate in between the bearing housing (45) and the rotor shaft (26) ; and **in that** a stationary flange (32) is provided under the rotor; that the rotor shaft (26) extends through a passage (33) in this flange (32); and that the flange (32) has an upwardly directed projection (37) on which the shearing edge (34) is provided.

2. Centrifugal spreader (21) according to claim 1, **characterised in that** the surface area (36) is rotationally symmetric and faces away from the rotor shaft (26).

3. Centrifugal spreader (21) according to claim 1 or 2, **characterised in that** the surface area (36) is provided at a position under the spreader arms (25).

4. Centrifugal spreader (21) according to any preceding claim, **characterised in that** the rotor (27) includes a downwardly facing collar (35) extending around the rotor shaft (26) and that the surface area (36) is part of this collar (35).

5. Centrifugal spreader (21) according to any preceding claim, **characterised in that** that the flange (32) has an elevation (39) and a recess (38) between the shearing edge (34) and the elevation (39); and that the collar (35) and the surface area (36) extend in this recess (38).

6. Centrifugal spreader (21) according to claim 1 or 5, **characterised in that** the centrifugal spreader (21) includes a gearbox (24) driving the rotor shaft (26); and that the flange (32) is provided on the gearbox (24).

7. Centrifugal spreader (21) according to any preceding claim, **characterised in that** the centrifugal spreader includes a spreader table (29) with an upper face (29') where the rotor (27) is provided with the spreader arms (25) over this upper face (29'), and where the surface area (36) is provided under this upper face (29').

8. Centrifugal spreader (21) according to any preceding claim, **characterised in that** the surface area (36) is cylindrical or conical.

9. Centrifugal spreader (21) according to any preceding claim, **characterised in that** between the surface area (36) and the shearing edge (34) there is a spacing between 0 mm and 3 mm.

10. Use of a centrifugal spreader (21) according to any preceding claim for spreading farmyard manure.

11. Use of a centrifugal spreader (21) according to any of claims 1 to 9 for spreading straw in a stable area.

## Patentansprüche

1. Schleuderstreuer (21) zum Streuen von Bodenverbesserungsmaterial, insbesondere von Mist, auf ein Feld, wobei der Schleuderstreuer (21) mindestens einen Rotor (27) auf einer aufrechten Rotorwelle (26) umfasst, die sich in einem Lagergehäuse (45) mit Abdichtungen befindet; wobei der Rotor (27) unter einer Zuführeinheit (22) angeordnet ist, die dem Rotor (27) das Bodenverbesserungsmaterial zuführt, und wobei der Rotor (27) Streuarme (25) umfasst, um das Bodenverbesserungsmaterial während der Rotation hinauszuschleudern; und wobei der Rotor (27) eine Oberfläche (36) umfasst, die sich um die Rotorwelle (26) erstreckt, **dadurch gekennzeichnet, dass**
mindestens eine stationäre Schneidkante (34) bereitgestellt wird, die mit der Oberfläche (36) in Kontakt steht oder höchstens 3 mm von der Oberfläche (36) beabstandet ist, und dazu ausgestaltet ist, von dem Rotor (27) entlang der Oberfläche (36) beförderte Fäden oder Schnüre zu schneiden, um zu vermeiden, dass Fäden oder Schnüre, die mit dem Bodenverbesserungsmaterial befördert und um den Rotor (27) gewunden werden, zwischen das Lagergehäuse (45) und die Rotorwelle (26) eindringen; sowie dadurch, dass
ein stationärer Flansch (32) unter dem Rotor bereitgestellt ist; dass die Rotorwelle (26) sich durch einen Durchlass (33) in dem Flansch (32) erstreckt; und dass der Flansch (32) einen nach oben gerichteten Vorsprung (37) aufweist, an dem die Schneidkante (34) bereitgestellt ist.

2. Schleuderstreuer (21) nach Anspruch 1, **dadurch gekennzeichnet, dass** die Oberfläche (36) rotationssymmetrisch und von der Rotorwelle (26) abgewandt ist.

3. Schleuderstreuer (21) nach Anspruch 1 oder 2, **dadurch gekennzeichnet, dass** die Oberfläche (36) in einer Position unter den Streuarmen (25) bereitgestellt ist.

4. Schleuderstreuer (21) nach einem der vorangehenden Ansprüche, **dadurch gekennzeichnet, dass** der Rotor (27) einen nach unten gewandten Bund (35) umfasst, der sich um die Rotorwelle (26) erstreckt, und dass die Oberfläche (36) Teil dieses Bunds (35) ist.

5. Schleuderstreuer (21) nach einem der vorangehenden Ansprüche, **dadurch gekennzeichnet, dass** der Flansch (32) eine Erhöhung (39) und eine Vertiefung (38) zwischen der Schneidkante (34) und der Erhöhung (39) aufweist; und dass der Bund (35) und die Oberfläche (36) sich in dieser Vertiefung (38) erstrecken.

6. Schleuderstreuer (21) nach Anspruch 1 oder 5, **dadurch gekennzeichnet, dass** der Schleuderstreuer (21) ein Getriebe (24) umfasst, das die Rotorwelle (26) antreibt; und dass der Flansch (32) an dem Getriebe (24) bereitgestellt wird.

7. Schleuderstreuer (21) nach einem der vorangehenden Ansprüche, **dadurch gekennzeichnet, dass** der Schleuderstreuer (21) eine Streufläche (29) mit einer oberen Fläche (29') umfasst, wobei der Rotor (27) mit den Streuarmen (25) über dieser oberen Fläche (29') bereitgestellt ist, und wobei die Oberfläche (36) unter dieser oberen Fläche (29') bereitgestellt ist.

8. Schleuderstreuer (21) nach einem der vorangehenden Ansprüche, **dadurch gekennzeichnet, dass** die Oberfläche (36) zylindrisch oder konisch ist.

9. Schleuderstreuer (21) nach einem der vorangehenden Ansprüche, **dadurch gekennzeichnet, dass** zwischen der Oberfläche (36) und der Schneidkante (34) ein Abstand zwischen 0 mm und 3 mm vorliegt.

10. Verwendung eines Schleuderstreuers (21) gemäß einem der vorangehenden Ansprüche zum Streuen von Mist.

11. Verwendung eines Schleuderstreuers (21) gemäß einem der Ansprüche 1 bis 9 zum Streuen von Stroh in einem Stallbereich.

## Revendications

1. Épandeur centrifuge (21) pour l'épandage de matériau d'amélioration du sol, en particulier de fumier de ferme, sur un champ, dans lequel l'épandeur centrifuge (21) comprend au moins un rotor (27) sur un arbre de rotor vertical (26) logé dans un boîtier de palier (45) avec des joints ; dans lequel le rotor (27) est disposé sous une unité d'alimentation (22) pour fournir le matériau d'amélioration du sol au rotor (27), et dans lequel le rotor (27) comprend des bras d'épandeur (25) pour projeter le matériau d'amélioration du sol pendant la rotation ; et dans lequel le rotor (27) comprend une surface (36) s'étendant autour de l' arbre de rotor (26), **caractérisé en ce qu'**au moins un bord de cisaillement stationnaire (34) est fourni qui est en contact avec cette surface (36) ou est espacé de moins de 3 mm de cette surface (36), adapté pour couper des ficelles ou cordes transportées par le rotor (27) le long de cette surface (36) afin d'empêcher ce faisant les ficelles ou cordes qui sont transportées avec le matériau d'amélioration du sol et enroulées autour du rotor (27) de pénétrer entre le boîtier de palier (45) et l'arbre de rotor (26) ; et **en ce qu'**une bride stationnaire (32) est fournie sous le rotor ; **en ce que** l'arbre de rotor (26) s'étend à travers un passage (33) dans cette bride (32) ; et **en ce que** la bride (32) a une saillie (37) dirigée vers le haut sur laquelle le bord de cisaillement (34) est fourni.

2. Épandeur centrifuge (21) selon la revendication 1, **caractérisé en ce que** la surface (36) est à symétrie de rotation et tourne le dos à l'arbre de rotor (26).

3. Épandeur centrifuge (21) selon la revendication 1 ou 2, **caractérisé en ce que** la surface (36) est fournie à une position sous les bras d'épandeur (25).

4. Épandeur centrifuge (21) selon une quelconque revendication précédente, **caractérisé en ce que** le rotor (27) comprend un collet (35) tourné vers le bas s'étendant autour de l'arbre de rotor (26) et **en ce que** la surface (36) fait partie de ce collet (35).

5. Épandeur centrifuge (21) selon une quelconque revendication précédente, **caractérisé en ce que** la bride (32) a une élévation (39) et un évidement (38) entre le bord de cisaillement (34) et l'élévation (39) ; et **en ce que** le collet (35) et la surface (36) s'étendent dans cet évidement (38).

6. Épandeur centrifuge (21) selon la revendication 1 ou 5, **caractérisé en ce que** l'épandeur centrifuge (21) comprend une boîte d'engrenage (24) entraînant l'arbre de rotor (26) ; et **en ce que** la bride (32) est fournie sur la boîte d'engrenage (24).

7. Épandeur centrifuge (21) selon une quelconque revendication précédente, **caractérisé en ce que** l'épandeur centrifuge comprend une table d'épandeur (29) avec une face supérieure (29') où le rotor (27) est doté de bras d'épandeur (25) au-dessus de cette face supérieure (29') et où la surface (36) est fournie sous cette face supérieure (29').

8. Épandeur centrifuge (21) selon une quelconque revendication précédente, **caractérisé en ce que** la surface (36) est cylindrique ou conique.

9. Épandeur centrifuge (21) selon une quelconque revendication précédente, **caractérisé en ce qu'**il y a un espace entre 0 mm et 3 mm entre la surface (36) et le bord de cisaillement (34).

10. Utilisation d'un épandeur centrifuge (21) selon une quelconque revendication précédente pour l'épandage de fumier de ferme.

11. Utilisation d'un épandeur centrifuge (21) selon l'une quelconque des revendications 1 à 9 pour l'épandage de paille dans une zone stable.
